# FASCICULE DE BREVET EUROPEEN

(11) **EP 0 381 104 B1**
(45) Date de publication et mention de la délivrance du brevet: **03.08.1994**
(21) Numéro de dépôt: 90101696.4
(22) Date de dépôt: 29.01.1990
(51) Int. Cl.: H04Q 11/04, H04M 3/24

(54) **Dispositif de raccordement d'une chaîne centrale de connexion à des unités de raccordement**
Anordnung zum Anschalten einer zentralen Schaltkette an Anschlusseinheiten
Device for the connection of a central connection chain to connection units

(30) Priorité: 02.02.1989 FR 8901348
(43) Date de publication de la demande: 08.08.1990
(73) Titulaire: ALCATEL CIT, 75008 Paris (FR)
(72) Inventeur: Helou, Didier, F-78210 Saint Cyr L'Ecole (FR); Peron, Jean-Yves, F-22300 Lannion (FR); Coutin, René, F-22200 Guingamp (FR); Thiebaut, Georges, F-22700 Perros Guirec (FR)
(74) Mandataire: Weinmiller, Jürgen

(56) Documents cités:
- EP-A- 0 111 406
- WO-A-88/03738
- GB-A- 2 067 050
- I.E.E.E. INTERNATIONAL CONFERENCE ON COMMUNICATIONS '87, Session 44, Paper 2,vol. 3, 10 juin 1987, New York, US, pages 1-5; P.COCHRANE et al.: "Transwitching - The next step in optical networks"
- I.E.E.E. GLOBAL TELECOMMUNICATIONS CONFERENCE Session 33, paper 3, vol. 2, 1er décembre 1986, New York, US, pages 1-5; A. AVENEAU et al.: "A versatile data multiplexer and cross-connector N*64/2048 kbits/s: BMX 264"
- ERICSSON REVIEW. no. 4, 1978, STOCKHOLM, SE, pages 140-149; B.ERICSON et al.: "Digital Group Selector in the AXE 10 System"

## Description

L'invention est du domaine des télécommunications et concerne le raccordement d'une chaîne centrale de connexion aux différentes unités de raccordement d'un central de télécommunications.

D'une manière générale la chaîne centrale de connexion réalise :
- une connexion unidirectionnelle entre une voie entrante quelconque d'une liaison multiplex entrante quelconque et une voie sortante quelconque d'une liaison multiplex sortante quelconque,
- la connexion entre une voie entrante quelconque et M voies sortantes quelconques,
- la connexion de N voies d'une même trame d'une liaison multiplex entrante quelconque sur N voies d'une même trame d'une liaison multiplex sortante quelconque, en respectant l'intégrité et le séquencement de la trame reçue.

Une connexion bidirectionnelle entre une extrémité A (demandeur) et une extrémité B (demandé) est réalisée sous la forme de deux connexions unidirectionnelles.

La chaîne centrale de connexion assure ainsi en outre :
- la commutation entre une unité de raccordement dite équipement d'auxiliaire et les voies de parole pour les signalisations à fréquences vocales,
- la diffusion simultanée vers plusieurs voies sortantes des tonalités et films d'exploitation,
- la commutation de façon permanente des voies d'une liaison multiplex transmettant des données ou des informations de signalisation sémaphore entre circuit et circuit, entre circuit et station sémaphore.

Pour assurer la sécurité de fonctionnement la chaîne de connexion comporte deux réseaux de connexion identiques.

Par ailleurs la qualité de transmission doit être conforme aux avis Q503 à Q513 du CCITT.

Un procédé et un système pour contrôler des messages d'informations numériques à diffuser par une chaîne centrale de connexion dupliqueé est décrit dans WO-A-8803738.

L'invention a pour but de contrôler de manière continue la transmission, pour chaque connexion.

Un autre but de l'invention est le contrôle des connexions établies.

L'invention a également pour but la détection des pannes.

L'invention a pour objet un dispositif de raccordement d'une chaîne centrale de connexion à des unités de raccordement, ladite chaîne centrale de connexion étant dupliquée et constituée par deux réseaux de connexion reliés par une liaison à des organes de commande, chaque unité de raccordement étant reliée aux deux réseaux de connexion par un dispositif de sélection comprenant deux circuits de raccordement, chaque circuit de raccordement étant relié par une liaison d'accès à l'unité de raccordement et par une liaison réseau à un réseau de connexion, lesdites liaisons d'accès et réseau étant des liaisons multiplex bidirectionnelles ayant des trames de longueur fixe, caractérisé par le fait que chaque trame comporte des voies de seize bits répartis en huit bits de données, cinq bits transparents et trois bits de contrôle, qu'un premier bit de contrôle est un bit de mode de fonctionnement d'un circuit de raccordement ayant une valeur 0 pour un mode de fonctionnement normal et une valeur 1 pour un mode de fonctionnement message, qu'un deuxième et un troisième bits de contrôle ont chacun une signification différente en fonction de la valeur du premier bit de contrôle, que le premier bit de contrôle a une valeur fixée par le réseau de connexion dans chaque voie qu'il émet vers un circuit de raccordement, et qu'en mode message un message est constitué par une multitrame d'ordre trente deux, ledit premier bit de contrôle ayant la valeur 1 pour une seule voie parmi celles émises par le réseau de connexion vers un circuit de raccordement, et celles délivrées par le circuit de raccordement à un réseau de connexion et ayant la valeur 1 pendant trente et une trames et la valeur 0 pendant la trente deuxième trame d'un multitrame, ledit message étant acheminé par le deuxième bit de contrôle, le troisième bit supportant un contrôle cyclique d'ordre trente deux calculé sur l'ensemble des bits véhiculés par les trames de la multitrame.

L'invention va être décrite à l'aide d'exemples de réalisation illustrés par les figures annexées dans lesquelles :
- la figure 1 représente schématiquement un central de télécommunications comportant un dispositif de raccordement de l'invention,
- la figure 2 représente un dispositif de sélection de la figure 1,
- la figure 3 est un chronogramme relatif aux voies émises par une unité de raccordement,
- la figure 4 est un chronogramme relatif aux voies reçues par une unité de raccordement,
- la figure 5 représente un circuit de raccordement de la figure 2.

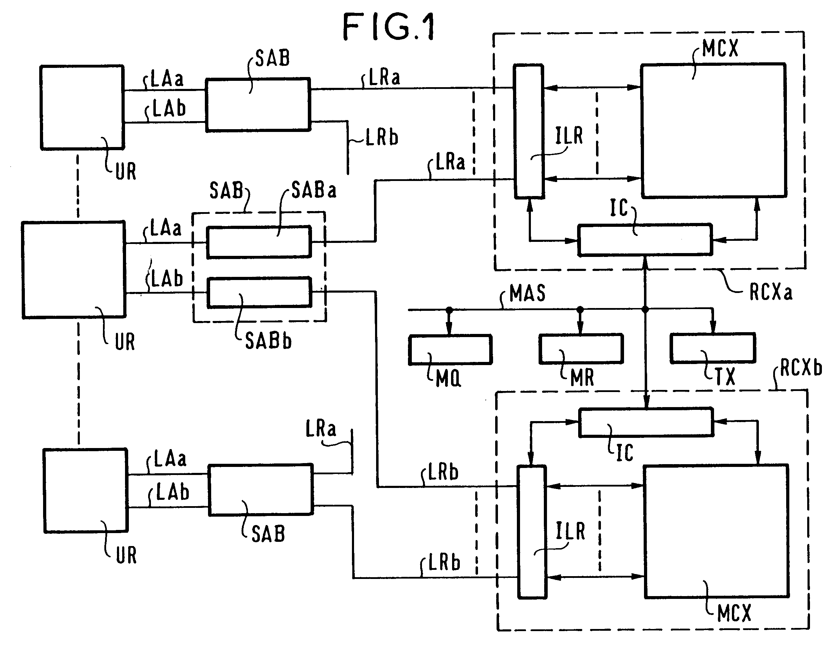

La figure 1 représente schématiquement un central de télécommunications comportant deux réseaux de connexion RCXa et RCXb, des unités de raccordement UR reliées chacune aux deux réseaux de connexion par un dispositif de sélection SAB ; les réseaux de connexion sont reliés par une liaison MAS à des organes de commande marqueur MQ, multienregistreur MR et taxeur TX. Les réseaux de connexion comportent chacun une matrice de connexion MCX, une interface d'entrée/sortie ILR reliée à la matrice de connexion et aux dispositifs de raccordement SAB, une interface de commande IC reliée à la matrice de connexion MCX, à l'interface d'entrée/sortie ILR et à la liaison MAS.

Chaque dispositif de sélection SAB est constitué par deux circuits de raccordement SABa et SABb ; le circuit de raccordement SABa est relié à une unité de raccordement UR par une liaison d'accès bidirectionnelle LAa et à l'interface d'entrée/sortie ILR du réseau de connexion RCXa par une liaison réseau bidirectionnelle LRa ; le circuit de raccordement SABb est relié à ladite unité de raccordement UR par une liaison d'accès bidirectionnelle LAb et à l'interface d'entrée/sortie ILR du réseau de connexion RCXb par une liaison réseau bidirectionnelle LRb.

Chaque liaison bidirectionnelle LAa, LAb, LRa, LRb est constituée par des lignes multiplex unidirectionnelles pour chaque sens de transmission, chaque ligne multiplex ayant une trame à 32 voies.

Comme cela sera explicité plus loin, chaque voie d'une trame comporte 16 bits qui sont constitués par les 8 bits du canal de base à 64 Kbit/s et par 8 bits supplémentaires dont 3 bits sont utilisés à des fins de contrôle permanents des transmissions, et bits dont l'utilisation est laissée libre.

Les 8 bits du canal de base et les 5 bits supplémentaires non utilisés sont commutés en transparent. Les contrôles permanents sont basés sur la comparaison permanente des informations présentes sur les deux réseaux de connexion, pour chaque sens d'une communication.

Les dispositifs de sélection SAB et les réseaux de connexion RCXa et RCXb constituent une chaîne de connexion, de structure double, mettant en oeuvre deux branches identiques, une première branche constituée par les circuits de raccordement SABa et le réseau de connexion RCXa, et une deuxième branche constituée par les circuits de raccordement SABb et le réseau de connexion RCXb. Les connexions sont faites simultanément dans les deux branches et la duplication est effective jusqu'aux unités de raccordement UR. De cette manière il y a maintien des communications établies en cas de perturbations sur une branche, et il n'y a pas de dégradation du trafic en cas de mise hors service d'un élément ou de l'ensemble d'une branche. Les dispositifs de sélection SAB sont disposés à proximité immédiate des unités de raccordement UR, ou encore implantés dans lesdites unités de raccordement. Chaque circuit de raccordement SABa et SABb comporte un amplificateur d'émission et un amplificateur de réception côté réseau de connexion, de sorte que les unités de raccordement UR peuvent être situées à une distance importante des réseaux de connexion, par exemple de 50 mètres pour des liaisons LRa et LRb classiques à 4 Mbit/s, et de l'ordre de 300 mètres, lorsque ces liaisons sont en fibres optiques au débit de 34 Mbit/s.

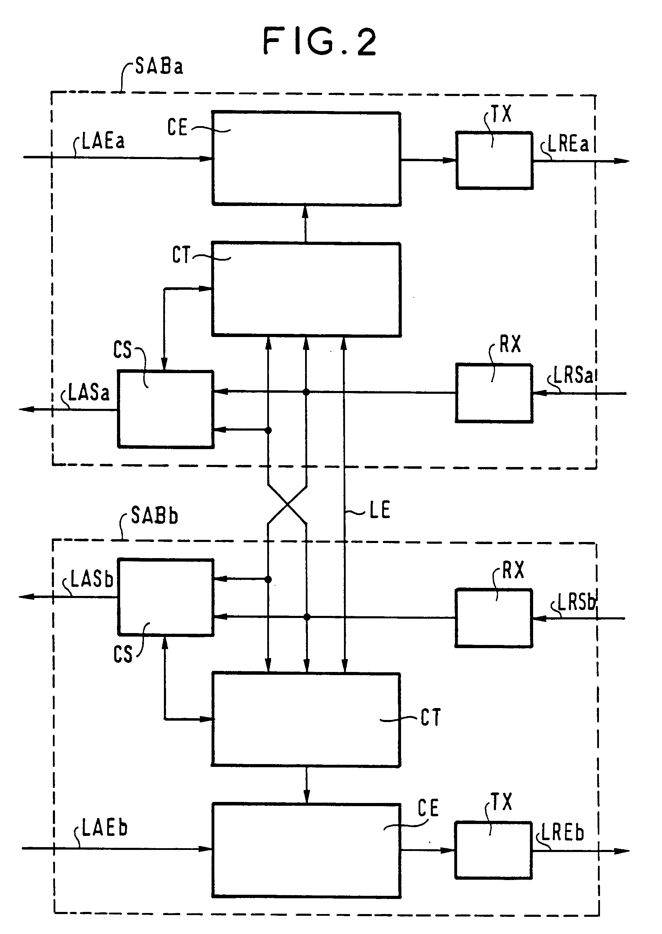

La figure 2 représente un dispositif de sélection SAB, constitué par deux circuits de raccordement SABa et SABb, reliés chacun à l'unité de raccordement par une liaison d'accès entrante LAEa, LAEb, pour recevoir les informations provenant de l'unité de raccordement et par une liaison d'accès sortante LASa, LASb, pour envoyer les informations destinées à l'unité de raccordement. Les liaisons d'accès LAEa et LASa constituent une liaison bidirectionnelle LAa de la figure 1, et les liaisons d'accès LAEb et LASb constituent une liaison bidirectionnelle LAb de la figure 1.

Chaque circuit de raccordement est également relié à un réseau de connexion par une liaison réseau entrante LREa et une liaison réseau sortante LRSa pour le circuit SABa, et par une liaison réseau entrante LREb et une liaison réseau sortante LRSb pour le circuit SABb ; lesdites liaisons sont dites entrantes ou sortantes par rapport aux réseaux de connexion qui reçoivent donc des informations par les liaisons entrantes LREa, LREb, et envoient des informations par les liaisons sortantes LRSa et LRSb. Les liaisons LREa et LRSa constituent une liaison réseau bidirectionnelle LRa de la figure 1, et les liaisons LREb et LRSb constituent une liaison réseau bidirectionnelle LRb de la figure 1.

Les liaisons bidirectionnelles LAEa, LAEb, LASa, LASb, LREa, LREb, LRSa, LRSb, sont constituées chacune par exemple par huit lignes multiplex unidirectionnelles, à 32 voies par trame, soit 256 voies pour chaque sens de transmission.

Chaque circuit de raccordement, SABa et SABb, comprend un circuit d'entrée CE relié à la liaison d'accès entrante LAEa, ou LAEb, un amplificateur émission TX relié en entrée au circuit d'entrée CE et en sortie à la liaison réseau entrante LREa, ou LREb, un amplificateur de réception RX relié en entrée à une liaison réseau sortante LRSa, ou LRSb, un circuit de sélection CS ayant une entrée reliée en sortie du circuit de réception RX du circuit de raccordement dont il fait partie et une autre entrée reliée en sortie du circuit de réception de l'autre circuit de raccordement, et une sortie reliée à une liaison d'accès sortante LASa, ou LASb, et un circuit de traitement CT ayant une entrée reliée à la sortie du circuit de réception du circuit de raccordement dont il fait partie et une autre entrée reliée à la sortie du circuit de réception de l'autre circuit de racccordement, et une sortie reliée à une entrée de commande du circuit de sélection CS ; le circuit de traitement CT est également relié à une entrée de commande du circuit d'entrée CE.

Les deux liaisons d'accès entrantes LAEa et LAEb sont reliées en sortie d'une unité de raccordement UR, figure 1 ; de même les deux liaisons d'accès sortantes LASa et LASb sont reliées à une entrée de ladite unité de raccordement.

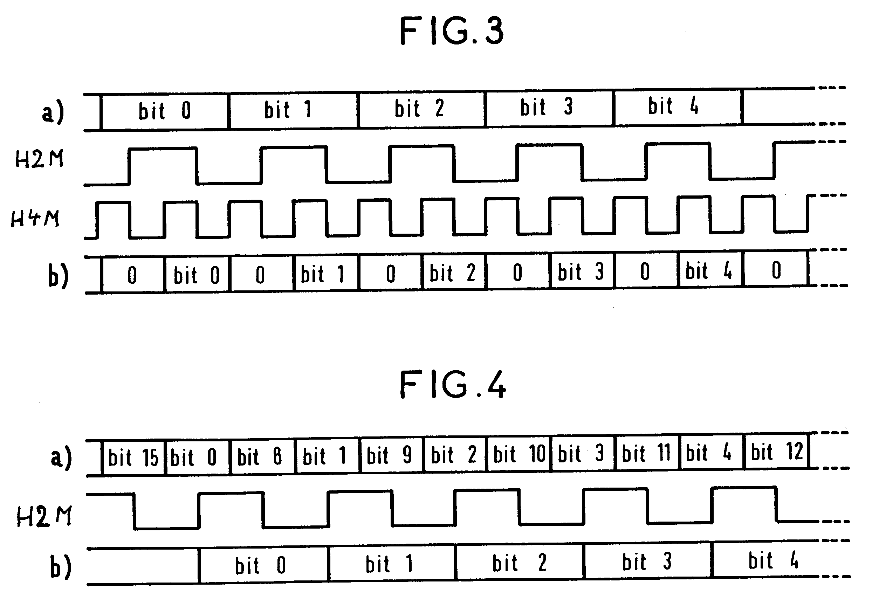

Dans l'unité de raccordement, avant émission sur les liaisons entrantes LAEa et LAEb, les données à 64 kbit/s et un signal d'horloge à 2 Mbit/s sont appliqués en entrée d'une porte ET ; le résultat logique délivré par la porte ET est pointé par un signal d'horloge à 4 Mbit/s. Ceci est illustré par le chronogramme de la figure 3 dans lequel la courbe a est relative aux bits d'information d'une trame à 32 voies de 8 bits chacune, la courbe H2M est un signal d'horloge à 2 Mbit/s, la courbe H4M est un signal d'horloge à 4 Mbit/s, la courbe b est le résultat du pointage par le signal H4M et l'on remarque que les bits 1, 2, 3, ... 7 de la courbe b ont une durée moitié des bits correspondants de la courbe a, et sont séparés par des bits de valeur nulle ; ces bits de valeur nulle sont les bits supplémentaires et sont numérotés de 8 à 15. Les données sont donc transmises à 4 Mbit/s sur les deux liaisons LAEa LAEb selon la structure suivante :
bits : 0, 8, 1, 9, 2, 10, 3, 11, 4, 12, 5, 13, 6, 14, 7, 15.

En réception, les informations à 4 Mbit/s présentes sur les liaisons d'accès sortantes LASa, LASb, sont pointées par un signal d'horloge à 4Mbit/s ; ceci est illustré par le chronogramme de la figure 4 dans lequel la courbe a est relative aux bits d'une trame à 32 voies de 16 bits chacune, la courbe H2M est un signal d'horloge à 2 Mbit/s et la courbe b le résultat du pointage par le signal H2M ; on retrouve en courbe b les 8 bits de données, bits 0 à 7, sans aucun bit supplémentaire.

Les 16 bits sont numérotés de 0 à 15, et leur affectation est la suivante :
bits 0 à 7 ; ils sont repérés D0 à D7 et sont des bits de données utilisés par le canal à 64 Kbit/s et commutés de manière transparente ;
bits 8 à 12 ; ces 5 bits supplémentaires, repérés X0 à X4 sont commutés de manière transparente ;
bits 13 à 15 ; ces 3 bits supplémentaires, sont des bits de contrôle utilisés pour la défense et la surveillance des réseaux de connexion RCXa et RCXb;
le bit 13, repéré SYN permet deux interpétations des bits 14 et 15, selon qu'il a une valeur nulle ou égale à 1 ;
pour SYN = 0 le fonctionnement est dit en mode normal
pour SYN = 1 il s'agit d'un fonctionnement en mode message,
pour un contrôle à la demande.

Les fonctionnements en mode normal et en mode message sont activés par l'interface de commande IC de chaque réseau de connexion RCXa, RCXb. Le mode normal est activé sur l'ensemble des 256 voies traitées par un circuit de raccordement, alors que le mode message n'est activé, sur demande du marqueur MQ que pour une voie déterminée parmi les 256 voies traitées par un circuit de raccordement ; bien entendu ce mode message peut être activé pour plusieurs circuits de raccordement, par l'interface de commande IC.

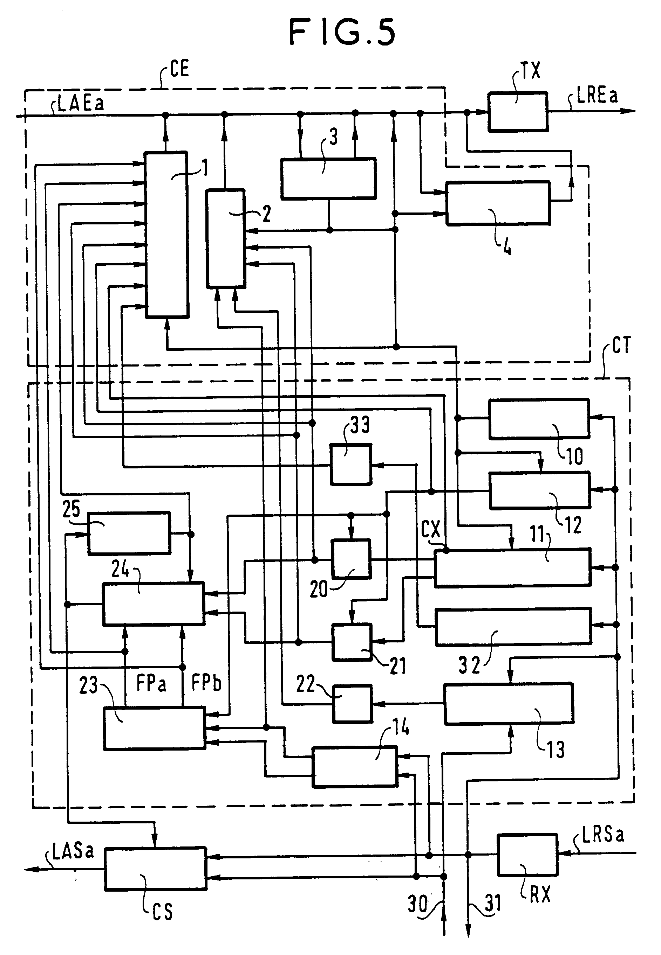

La figure 5 représente les circuits d'entrée/sortie CE, et de traitement CT, d'un circuit de raccordement, SABa par exemple, de la figure 2.

Le circuit d'entrée/sortie comprend un registre d'émission de message 1, du type paralléle/série, sa sortie série étant reliée à la liaison d'accès entrante LAEa pour y injecter un message, un circuit d'injection de faute de parité ou de comparaison 2 relié en sortie à la liaison d'accès entrante LAEa, un circuit de calcul de parité 3 relié en entrée et en sortie à la liaison d'accès entrante, et un circuit de calcul 4 pour un calcul de contrôle cyclique par redondance relié en entrée et en sortie à la liaison d'accès entrante.

Le circuit de traitement comporte, un circuit de détection du signal de synchronisation 10, un circuit de réception de message 11, un circuit de vérification 12, du contrôle cyclique par redondance d'un message, un comparateur 13, un circuit faute de CRC, 32, pour les fautes du contrôle cyclique par redondance, et un circuit de calcul de parité 14 ; tous ces circuits ont leur entrée reliée en sortie de l'amplificateur de réception RX.

Le circuit de traitement comporte également un premier point mémoire 20 pour un positionnement imposé ou libre et un deuxième point mémoire 21 pour un positionnement côté a ou b, un point mémoire faute de comparaison 22, une mémoire de parité 23, une logique de décision 24, un point de mémoire choix préférentiel 25, et un point mémoire 33 pour les fautes de calcul cyclique par redondance.

Le circuit de détection de signal de synchronisation 10 surveille le bit 13 de la liaison réseau sortante LRSa et délivre un signal SYN au registre d'émission de message 1, au circuit d'injection de parité ou de comparaison 2, au circuit de calcul de parité 3, au circuit de calcul de contrôle cyclique par redondance 4, et à la liaison d'accès entrante LAEa. Lorsque le signal SYN a la valeur 0 il commande le circuit de calcul de parité 3 et le circuit d'injection de faute de parité ou de comparaison 2 ; lorsqu'il a la valeur 1 il commande le registre d'émission de message 1, pour émission du message contenu dans ce registre, et le circuit de calcul 4 pour le calcul du contrôle cyclique par redondance sur les bits 0 à 15 des voies d'une multitrame de la liaison LREa acheminant le message.

Le circuit de détection de signal de synchronisation 10 commande également le circuit de vérification 12 et le circuit de réception de message 11 lorsque le signal SYN a la valeur 1. Le circuit de réception de message 11 reçoit dans un champ de commande d'un message un bit de positionnement imposé ou libre et délivre au premier point mémoire 20 un signal de valeur 1 pour un positionnement libre et de valeur 0 pour un positionnement imposé ; le circuit de réception de message reçoit également dans le champ de commande un bit de positionnement côté a ou côté b et délivre un signal correspondant au deuxième point mémoire 21 ; les points mémoires 20 et 21 sont validés par le circuit de vérification 12 lorsque la vérification du contrôle cyclique par redondance est correcte.

Le point mémoire 33 est relié en sortie du circuit 32, faute de CRC, et mémorise une faute sur le contrôle cyclique par redondance.

Le comparateur 13 est également relié en entrée par une liaison multiplex 30 en sortie de l'amplificateur de réception RX du circuit de raccordement SABb ; le comparateur 13 effectue une comparaison voie par voie entre une voie délivrée par l'amplificateur de réception du circuit de raccordement SABa et une voie délivrée par l'amplificateur de réception du circuit de raccordement SABb ; en cas de faute le comparateur délivre un signal faute de comparaison au point mémoire 22. Le circuit de calcul de parité 14 calcule la parité de chaque voie délivrée par l'amplificateur de réception ; le résultat de ce calcul est mémorisé dans la mémoire de parité 23 ; le circuit de calcul de parité 14 est également relié à la liaison multiplex 30 et le résultat du calcul de parité effectué sur une voie délivrée par l'amplificateur de réception du circuit de raccordement SABb est délivré à la mémoire de parité 23. La mémoire de parité comporte un point mémoire par voie pour la liaison réseau sortante LRSa et un point mémoire par voie pour la liaison réseau sortante LRSb. La logique de décision 24 est reliée en sortie de la mémoire de parité et en reçoit, pour chaque voie, un signal FPa et un signal FPb qui sont les résultats de lecture des deux points mémoires affectés l'un à une voie de la liaison LRSa et l'autre à une voie de la liaison LRSb. En mode message après lecture du point mémoire affecté à la voie de la liaison LRSa qui achemine le message, ce point mémoire est réinitialisé si la vérification effectuée par le circuit de vérification 12 est correcte. La logique de décision 24 est également reliée à la sortie des premier et deuxième points mémoires 20 et 21, et en sortie de la mémoire des choix précédents 25. La sortie de la logique de décision est reliée à une entrée de commande du circuit de sélection CS et à l'entrée de la mémoire des choix précédents 25.

Le registre d'émission de message 1 est relié en entrée, en sortie de la mémoire de parité 23 dont il reçoit le résultat FPa de la lecture du point mémoire affecté à la voie de la liaison LRSa acheminant un message, et le résultat FPb de la lecture du point mémoire affecté à la voie de la liaison LRSb acheminant un message, à la sortie de la mémoire (25) de choix préférentiel, à la sortie des premier et deuxième points mémoires 20 et 21, à la sortie du point mémoire 33, à la sortie du circuit de vérification 12 et à une sortie CX de circuit de réception de message 11 qui délivre sur cette sortie un champ de connexion contenu dans le message.

Le circuit d'injection de faute de parité ou de comparaison 2 est relié en entrée, à la sortie du circuit de calcul de parité 14 et à la sortie du point mémoire faute de comparaison 22 ; il est également relié en sortie des premier et deuxième points mémoires 20 et 21.

Le fonctionnement en mode normal, bit 13, SYN = o, permet de détecter les erreurs de parité sur les liaisons réseaux entrantes LREa, LREb, et sur les liaisons réseaux sortantes LRSa, LRSb, et de transmettre vers chaque réseau de connexion, RCXa, RCXb, par le bit 14, les erreurs de comparaison entre les voies correspondantes des liaisons LRSa et LRSb, détectées dans les circuits de traitement CT, ou le résultat du calcul de parité effectué sur la liaison réseau entrante LRSa, ou LRSb, par le circuit de traitement ; le bit 15, noté PAR, parité, est tel que le nombre de bits de valeur 1, calculé sur les bits 0 à 15 émis sur la liaison entrante LREa, ou LREb, soit pair.

Le fonctionnement en mode message, bit 13, SYN = 1, est activé par l'interface de commande IC d'un réseau de connexion, sur demande du marqueur MQ.

Il ne peut s'effectuer que sur une seule voie parmi les 256 voies d'une liaison réseau de 8 multiplex à 32 voies. Le bit 14 correspond à un message, le bit 15 donne le résultat d'un contrôle cyclique par redondance calculé sur les bits 0 à 14 de la voie concernée et relatif à un message. Dans ce mode de fonctionnement un réseau de connexion transmet un message à destination d'un circuit de raccordement d'un dispositif de raccordement, et ledit circuit de raccordement émet un message à destination dudit réseau de connexion.

Quel que soit le mode de fonctionnement, la comparaison entre les bits d'une voie des liaisons réseaux sortantes LRSa et LRSb ne porte que sur les bits 0 à 12, les bits 13, 14 et 15 pouvant être différents sur les liaisons sortantes comme c'est le cas en mode message. La logique de décision du circuit de traitement CT choisit entre les deux voies correspondantes des liaisons réseaux sortantes LRSa et LRSb, celle qui sera transmise sur la liaison d'accès sortante, LASa pour le circuit de raccordement SABa, et LASb pour le circuit de raccordement SABb. Les critères de choix de la logique de décision sont :
FPa = 1 faute de parité détectée sur LRSa, pour chaque voie.
FPb = 1 faute de parité détecté sur LRSb, pour chaque voie.
- PI :: PI = 1 positionnement libre, ou PI = o positionnement imposé par le réseau de connexion. Le positionnement, qu'il soit libre ou imposé concerne les 512 voies traitées par le circuit de raccordement ; il est mémorisé dans un point mémoire du circuit de traitement.
- P :: P = a pour positionnement imposé côté LRSa, ou P = b pour positionnement côté LRSb, pour l'ensemble des 512 voies.
- Cp :: Choix préférentiel : a pour côté LRSa, ou b pour côté LRSb, pour chaque voie.

Dans le circuit de traitement CT les fautes de parité FPa et FPb de chaque voie sont mémorisées dans la mémoire faute de parité 23; chaque faute de parité est mémorisée dans un point mémoire de la mémoire faute de parité ; il y a donc deux points mémoires par voie, soit 2 fois 256 points mémoires pour les 256 voies des liaisons réseaux sortantes LRSa et LRSb. Le positionnement libre ou imposé, PI, est mémorisé, dans le circuit de traitement, dans le point mémoire de positionnement 20; de même le positionnement côté a ou b, P, est mémorisé dans le point mémoire côté du positionnement 21. Le choix préférentiel est mémorisé dans la mémoire de choix préférentiel 25 du circuit de traitement ; ladite mémoire de choix préférentiel comporte donc un point mémoire pour les 256 voies.

La table de vérité de la logique de décision est donnée ci-après, Cc étant le résultat du choix en fonction des critères de choix :

| PI | P | FPa | FPb | Cc |
|---|---|---|---|---|
| 0 | a | X | X | a |
| 0 | b | X | X | b |
| 1 | X | 0 | 0 | Cp |
| 1 | X | 1 | 0 | b |
| 1 | X | 0 | 1 | a |
| 1 | X | 1 | 1 | Cp |

L'initialisation générale de la mémoire de choix préférentiel 25 est effectuée par un positionnement imposé côté LRSa ou LRSb. La logique de décision 24 délivre un signal de commande Cc au circuit de sélection CS pour relier la liaison d'accès sortante à la liaison réseau sortante sélectionnée.

### FONCTIONNEMENT NORMAL, bit 13, SYN =0

On va se référer au circuit de raccordement SABa, mais bien entendu tout ce qui va être exposé s'applique au circuit de raccordement SABb ; pour cela il suffit de changer a en b dans les références, et inversement, par exemple LRSa en LRSb. Pour chaque voie, le circuit de traitement CT effectue la comparaison bit à bit entre les informations reçues sur les liaisons réseaux sortantes LRSa et LRSb et transmet le résultat au circuit d'entrée CE ; le circuit de traitement CT vérifie la parité pour chaque voie reçue sur la liaison réseau sortante LRSa, et en cas d'erreur active le point mémoire faute de parité affecté à la voie considérée. La logique de décision donne la liaison réseau choisie, dont l'information, pour la voie considérée, est transmise sur la liaison d'accès sortante LASa.

Selon l'indication du point mémoire 20 de positionnement libre ou imposé et du point mémoire 21, côté du positionnement, le circuit d'entrée CE émet dans le bit 14 de la liaison réseau entrante LREa
le résultat de la comparaison si le positionnement est libre ou imposé côté liaison réseau LRSb.

Le circuit d'entrée CE calcule la parité sur les bits 0 à 14 de la liaison réseau entrante LREa et le résultat "PAR" est émis dans le bit 15.

### FONCTIONNEMENT EN MODE MESSAGE, bit 13, SYN = 1.

Il est rappelé qu'en mode de message le bit 13 à la valeur 1 pour seulement une voie parmi les 256 voies traitées par un circuit de raccordement.

Dans ce mode de fonctionnement le bit 13 est égal à la synchronisation multitrame, c'est-à-dire une séquence de 32 bits dont 31 bits ont la valeur 1, le dernier bit ayant la valeur 0. Cette structure de synchronisation multitrame autorise sur des liaisons perturbées, dans le cadre d'un contrôle de longue durée, une synchronisation du processus de contrôle à la demande.

Le bit 14 donne une séquence de 32 bits constituée d'un premier champ de 24 bits supportant la référence de connexion et d'un second champ de 8 bits supportant sur une liaison réseau sortante les commandes émises par un réseau de connexion à destination d'un circuit de raccordement, ou les informations émises sur une liaison réseau entrante ou un circuit de raccordement à destination d'un réseau de connexion.

Les commandes émises par un réseau de connexion sont relatives au positionnement, imposé ou libre, d'un circuit de raccordement sur une liaison sortante LRSa ou LRSb. Les informations émises par un circuit de raccordement comprennent d'une part le résultat des contrôles effectués par ledit circuit de raccordement et d'autre part son état de positionnement effectif, c'est-à-dire quelle liaison LRSa ou LRSb est sélectionnée par la logique de décision.

Le bit 15, dans le mode message, donne une séquence de 32 bits constituée par le résultat du calcul de contrôle cyclique par redondance sur une multitrame et sur 16 bits par trame soit au total un bloc de 512 bits. Le calcul est effectué pendant une multitrame et le résultat est transmis dans la multitrame suivante, bit après bit. Le contrôle cyclique par redondance est un polynôme standard de degré 32.

Pour ce mode message on va se référer au circuit de raccordement SABa, mais bien entendu tout ce qui va être exposé s'applique au circuit de raccordement SABb ; pour cela il suffit de changer dans les références a en b, et inversement, par exemple LRSa en LRSb.

Le fonctionnement en mode message du circuit de raccordement SABa est déclenché dès la détection de la transition du bit 13, SYN de 0 à 1, dans une voie de la liaison réseau sortante LRSa. Les trames reçues par le circuit de traitement CT sont à partir de cet instant, numérotées modulo 32 ; le circuit de traitement procède sur la liaison LRSa à la vérification du contrôle cyclique par redondance sur le bit 15 de la voie concernée sur les trames 0 à 31, et si la vérification est correcte, le circuit de traitement mémorise les positionnements PI (PI = 1 pour un positionnement libre, PI = 0 pour un positionnement imposé), et P ( P = a positionnement imposé côté LRSa, P = b positionnement imposé côté LRSb) ; ces positionnements PI et P sont reçues par la liaison LRSa, dans le champ de commande du message reçu a partir de la transition 0 à 1 du bit 13.

Le circuit de traitement contrôle également la parité des voies sur la liaison réseau sortante LRSa, et le résultat est mémorisé dans les points mémoires de la mémoire faute de parité et transmis à l'autre circuit de raccordement SABb.

Le circuit de traitement CT transmet au circuit d'entrée CE, pour émission dans le champ d'information du message émis sur la liaison entrante LREa par le bit 14 :
- le résultat de la vérification du contrôle cyclique par redondance sur la liaison réseau sortante LRSa,
- le résultat de lecture des mémoires de positionnement, c'est-à-dire si le positionnement est libre ou imposé côté a ou b, et du point mémoire du choix précédent pour la voie concernée par le message,
- le résultat de la lecture du point mémoire faute de parité affecté à la voie concernée sur la liaison réseau sortante LRSa,
- la référence de connexion reçue sur la liaison sortante LRSa ;
cette référence de connexion est contenue dans le message reçu, et le transfert sur la liaison réseau entrante LREa se fait bit à bit, en temps réel.

Le circuit d'entrée CE effectue, sur la liaison réseau entrante LREa un calcul de contrôle cyclique par redondance sur multitrame de 32 trames sur 16 bits, soit au total un bloc de 512 bits. Le calcul est effectué pendant une multitrame et le résultat qui constitue une séquence de 32 bits est envoyé, bit à bit dans la multitrame suivante, dans le bit 15 de la voie concernée par le message émis.

Les informations émises sur les liaisons réseaux entrantes LREa et LREb des circuits de raccordement SABa et SABb sont reçues dans chaque réseau de connexion correspondant par l'interface d'entrée/sortie ILR. En fonctionnement en mode normal le bit 14 est surveillé en permanence et les fautes de comparaison sont mémorisées ; le bit 14 contient les fautes de comparaison en positionnement libre ou imposé. Les fautes de comparaison sont accessibles par l'interface de commande IC du réseau de connexion. En fonctionnement en mode message les bits 0 à 12 sont transmis en transparent, par l'interface d'entrée/sortie ILR, des liaisons réseaux entrantes LRE vers la matrice de connexion MCX, et de la matrice de connexion vers les liaisons réseaux sortantes LRS. Un message à destination d'une unité de raccordement UR est injecté par l'interface entrée/sortie sur la liaison réseau sortante LRS correspondante et le message émis en réponse par l'unité de raccordement parvient à l'interface entrée/sortie par la ligne réseau entrante LRE correspondante.

## Revendications

1. Dispositif de raccordement d'une chaîne centrale de connexion à des unités de raccordement (UR), ladite chaîne centrale de connexion étant dupliquée et constituée par deux réseaux de connexion (RCXa ; RCXb) reliés par une liaison (MAS) à des organes de commande (MQ, MR, TX), chaque unité de raccordement étant reliée aux deux réseaux de connexion par un dispositif de sélection (SAB) comprenant deux circuits de raccordement (SABa ; SABb), chaque circuit de raccordement étant relié par une liaison d'accès (LAa ; LAb) à l'unité de raccordement et par une liaison réseau (LRa ; LRb) à un réseau de connexion, lesdites liaisons d'accès et réseau étant des liaisons multiplex bidirectionnelles ayant des trames de longueur fixe, caractérisé par le fait que chaque trame comporte des voies de seize bits répartis en huit bits de données, cinq bits transparents et trois bits de contrôle, qu'un premier bit de contrôle est un bit de mode de fonctionnement d'un circuit de raccordement (SABa) ayant une valeur 0 pour un mode de fonctionnement normal et une valeur 1 pour un mode de fonctionnement message, qu'un deuxième et un troisième bits de contrôle ont chacun une signification différente en fonction de la valeur du premier bit de contrôle, que le premier bit de contrôle a une valeur fixée par le réseau de connexion (RCXa) dans chaque voie qu'il émet vers un circuit de raccordement, et qu'en mode message un message est constitué par une multitrame d'ordre trente deux, ledit premier bit de contrôle ayant la valeur 1 pour une seule voie parmi celles émises par le réseau de connexion vers un circuit de raccordement, et celles délivrées par le circuit de raccordement à un réseau de connexion et ayant la valeur 1 pendant trente et une trames et la valeur 0 pendant la trente deuxième trame d'un multitrame, ledit message étant acheminé par le deuxième Dit de contrôle, le troisième bit supportant un contrôle cyclique (CRC) d'ordre trente deux calculé sur l'ensemble des bits véhiculés par les trames de la multitrame.

2. Dispositif de raccordement selon la revendication 1, caractérisé par le fait qu'en mode de fonctionnement normal, dans chaque voie émise par un réseau de connexion (RCXa) vers un circuit de raccordement (SABa) les premier et deuxième bits de contrôle ont une valeur zéro et le troisième bit de contrôle a une valeur telle que le nombre de bits de valeur 1 calculé sur les seize bits de la voie soit pair, et que dans chaque voie délivrée par le circuit de raccordement (SABa) au réseau de connexion (RCXa) le premier bit de contrôle a la valeur 0, le deuxième bit de contrôle donne le résultat de la comparaison effectuée par les moyens de traitement lorsque les moyens de décision reçoivent une information de positionnement libre ou de positionnement imposé côté de la liaison réseau sortante (LRSb) reliée à l'autre circuit de raccordement et le résultat du calcul de parité effectué par les moyens de traitement lorsque les moyens de décisions reçoivent une information de positionnement imposé sur la liaison réseau sortante à laquelle les moyens de traitement sont reliés, et le troisième bit de contrôle a une valeur telle que le nombre de bits de valeur 1 calculé sur les seize bits de la voie délivrée soit pair.

3. Dispositif de raccordement selon la revendication 1, caractérisé par le fait qu'en mode de fonctionnement message, dans une voie émise par un réseau de connexion (RCXa) vers un circuit de raccordement (SABa), le premier bit de contrôle a la valeur 1, le deuxième bit de contrôle correspond à un message comportant un champ de commande et un champ de référence de connexion désignant une voie parmi les voies délivrées par le circuit de raccordement au réseau de connexion (RCXa), le troisième bit de contrôle correspond au résultat d'un contrôle cyclique par redondance effectué par le réseau de connexion sur les seize bits des voies d'une multitrame précédente émise vers le circuit de raccordement, et que dans une voie désignée par ledit champ de référence de connexion et délivrée par le circuit de raccordement (SABa) au réseau de connexion (RCXa) le premier bit de contrôle a la valeur 1, le deuxième bit de contrôle correspond à un message comportant un champ d'information et un champ de référence de connexion identique à celui contenu dans le message émis par le réseau de connexion, et le troisième bit de contrôle correspond au résultat d'un contrôle cyclique par redondance effectué par ledit circuit de raccordement sur les seize bits des voies d'une multitrame précédente émise vers le réseau de connexion.

## Claims

1. An interconnection system for interconnecting connection units (UR) and a central switching facility, said central switching facility being duplicated and constituted by two switching networks (RCXa, RCXb) which are connected by a link (MAS) to control members (MQ, MR, TX), each connection unit being connected to both switching networks via a selector circuit (SAB) comprising two connection circuits (SABa, SABb), each connection circuit being connected by an access link (LAa, LAb) to the connection unit and by a network link (LRa, LRb) to one of the switching networks, said network and access links being two-way multiplex links having frames of fixed length, the interconnection system being characterized in that each frame comprises 16-bit time slots providing 8 data bits, 5 transparent bits, and 3 check bits, a first one of the check bits being a connection circuit operation mode bit having a value 0 for a normal operation mode and a value 1 for a message operation mode, with the second and third check bits having respective different meanings as a function of the value of the first check bit, the value of the first check bit being fixed by the switching network (RCXa) in each time slot that it transmits towards a connection circuit, and a message being constituted in message mode by a multiframe of order thirty-two, said first check bit having the value 1 for only one time slot out of the time slots transmitted by the switching network to a connection circuit, and likewise for one time slot out of the time slot delivered by the connection circuit to the switching network, the value 1 being maintained for thirty-one frames and replaced by the value 0 during the thirty-second frame of a multiframe, the said message being conveyed by the second check bit, and the third check bit conveying a cyclic redundancy check (CRC) of order thirty two calculated over all of the bits conveyed by the frames of the multiframe.

2. An interconnection system according to claim 1, characterized by the fact that in normal operation mode, the first and second check bits in each of the time slots transmitted by a switching network (RCXa) to a connection circuit (SABa) have the value zero and the third check bit has a value such that the number of one value bits calculated over the sixteen bits of the time slot is even, and that in each time slot delivered by the connection circuit (SABa) to the switching network (RCXa) the first check bit has the value 0, the second check bit gives the result of a comparison performed by the processor means when the decision means receive a flag concerning free or forced selection of the side of the output network link (LRSb) connected to the other connection circuit, and the result of the parity calculation performed by the processor means when the decision means receive a forced selection flag on the output network link to which the processor means are connected, and the third check bit has a value such that the number of one value bits calculated over the sixteen bits of the delivered time slot is even.

3. An interconnection circuit according to claim 1, characterized by the fact that in message operation mode, the first check bit in the time slot transmitted by a switching network (RCXa) to a connection circuit (SABa) has the value 1, the second check bit corresponds to a message comprising a control field and a switching reference field designating one time slot selected from the time slots delivered by the connection circuit to the switching network (RCXa), the third check bit corresponds to the result of a cyclic redundancy check performed by the switching network on the sixteen bits of the time slots of a preceding multiframe transmitted to the connection circuit, and that in a time slot designated by said switching reference field and delivered by the connection circuit (SABa) to the switching network (RCXa), the first check bit has the value 1, the second check bit corresponds to a message comprising an information field and a switching reference field identical to that contained in the message transmitted by the switching network, and the third check bit corresponds to the result of a cyclic redundancy check performed by the said connection circuit on the sixteen bits of the time slot of a preceding multiframe transmitted to the switching network.

## Patentansprüche

1. Vorrichtung zum Anschluß einer zentralen Verbindungskette an Anschlußeinheiten (UR), wobei die zentrale Verbindungskette dupliziert ist und aus zwei Vermittlungsnetzen (RCXa, RCXb) besteht, die über eine Verbindung (MAS) an Steuerorgane (MQ, MR, TX) angeschlossen sind, wobei jede Anschlußeinheit mit den beiden Vermittlungsnetzen über eine Selektionsvorrichtung (SAB) verbunden ist, die zwei Anschlußschaltungen (SABa, SABb) enthält, welche je über eine Zugangsverbindung (LAa, LAb) an die Anschlußeinheit und über eine Netzverbindung (LRa, LRb) an ein Vermittlungsnetz angeschlossen sind, wobei die Zugangs- und Netzverbindungen in zwei Richtungen wirkende Multiplexverbindungen sind und Rahmen fester Länge enthalten, dadurch gekennzeichnet, daß jeder Rahmen Kanäle mit 16 Bits enthält, die in acht Datenbits, fünf transparente Bits und drei Kontrollbits aufgeteilt sind, daß ein erstes Kontrollbit ein Bit für den Betriebsmodus einer Anschlußschaltung (SABa) ist, dessen Wert 0 einen Normalbetrieb und dessen Wert 1 einen Betrieb im Meldemodus bezeichnet, daß ein zweites und ein drittes Kontrollbit je eine andere Bedeutung abhängig vom Wert des ersten Kontrollbits besitzen, daß das erste Kontrollbit einen vom Vermittlungsnetz (RCXa) in jedem Kanal, den es in Richtung zur Anschlußschaltung aussendet, festgelegten Wert besitzt und daß im Meldemodus eine Meldung aus einem Vielfachrahmen der Ordnung 32 besteht, wobei das erste Kontrollbit den Wert 1 für nur einen Kanal unter den vom Vermittlungsnetz in Richtung auf die Anschlußschaltung ausgesandten Kanälen und unter den von der Anschlußschaltung in Richtung auf das Vermittlungsnetz ausgesandten Kanälen besitzt und den Wert 1 während 31 Rahmen sowie den Wert 0 während des 32sten Rahmens eines Multirahmens besitzt, wobei die Meldung vom zweiten Kontrollbit übertragen wird, während das dritte Bit eine zyklische Kontrolle (CRC) der Ordnung 32 trägt, die aus der Gesamtheit der von den Rahmen des Vielfachrahmens übertragenen Bits berechnet ist.

2. Anschlußvorrichtung nach Anspruch 1, dadurch gekennzeichnet, daß im normalen Betrieb in jedem von einem Vermittlungsnetz (RCXa) in Richtung auf eine Anschlußschaltung (SABa) ausgesandten Kanal das erste Kontrollbit und das zweite Kontrollbit einen Wert 0 haben und das dritte Kontrollbit einen solchen Wert hat, daß die Anzahl der Bits des Werts 1, berechnet über die 16 Bits des Kanals, geradzahlig ist, und daß in jedem von der Anschlußschaltung (SABa) an das Vermittlungsnetz (RCXa) gelieferten Kanal das erste Kontrollbit den Wert 0 hat, das zweite Kontrollbit das Ergebnis des Vergleichs wiedergibt, der von den Verarbeitungsmitteln durchgeführt wurde, wenn die Entscheidungsmittel eine Information über die freie oder erzwungene Positionierung auf der Seite der ausgehenden Netzverbindung (LRSb) empfangen, die an die andere Anschlußschaltung angeschlossen ist, und das Ergebnis der Prioritätsberechnung wiedergibt, die von den Verarbeitungsmitteln durchgeführt wurde, wenn die Entscheidungsmittel eine Information über die erzwungene Positionierung auf der ausgehenden Netzverbindung empfangen, an die die Verarbeitungsmittel angeschlossen sind, während das dritte Kontrollbit einen solchen Wert hat, daß die Anzahl der Bits des Werts 1, berechnet über die 16 Bits des gelieferten Kanals, geradzahlig wird.

3. Anschlußvorrichtung nach Anspruch 1, dadurch gekennzeichnet, daß im Meldemodus in einem von einem Vermittlungsnetz (RCXa) in Richtung auf eine Anschlußschaltung (SABa) ausgesandten Kanal das erste Kontrollbit den Wert 1 hat, das zweite Kontrollbit einer Meldung entspricht, die ein Steuerfeld und ein Referenzfeld für die Verbindung enthält, das einen Kanal unter den von der Anschlußschaltung an das Vermittlungsnetz (RCXa) gelieferten Kanälen bezeichnet, und das dritte Kontrollbit dem Ergebnis einer zyklischen Kontrolle mittels Redundanz entspricht, die vom Vermittlungsnetz auf die 16 Bits der Kanäle eines vorhergehenden zur Anschlußschaltung ausgesandten Vielfachrahmens angewandt wurde, und daß in einem vom Verbindungsreferenzfeld bezeichneten und von der Anschlußschaltung (SABa) an das Vermittlungsnetz (RCXa) gelieferten Kanal das erste Kontrollbit den Wert 1 hat, das zweite Kontrollbit einer Meldung entspricht, die ein Informationsfeld und ein Referenzverbindungsfeld enthält, das dem gleicht, das in der vom Vermittlungsnetz ausgesandten Meldung enthalten ist, während das dritte Kontrollbit dem Ergebnis einer zyklischen Kontrolle mittels Redundanz entspricht, die von der Anschlußschaltung auf die 16 Bits der Kanäle eines vorhergehenden, in Richtung auf das Vermittlungsnetz ausgesandten Vielfachrahmens angewandt wurde.
